# EUROPÄISCHE PATENTSCHRIFT

(11) **EP 2 999 960 B1**
(45) Veröffentlichungstag und Bekanntmachung des Hinweises auf die Patenterteilung: **18.06.2025**
(21) Anmeldenummer: 14700866.8
(22) Anmeldetag: 16.01.2014
(51) Int. Cl.: G01N 29/06, G01N 29/44

(54) **SAFT-ANALYSE OBERFLÄCHENNAHER DEFEKTE**
SAFT ANALYSIS OF DEFECTS CLOSE TO THE SURFACE
ANALYSE SAFT DE DÉFAUTS SUPERFICIELS

(30) Priorität: 13.06.2013 DE 102013211064
(43) Veröffentlichungstag der Anmeldung: 30.03.2016
(73) Patentinhaber: Siemens Energy Global GmbH & Co. KG, 81739 München (DE)
(72) Erfinder: MOOSHOFER, Hubert, 80538 München (DE)
(86) Internationale Anmeldenummer: PCT/EP2014/050752
(87) Internationale Veröffentlichungsnummer: WO 2014/198424

(56) Entgegenhaltungen:
- EP-A1- 2 469 276
- DE-A1- 102005 051 783
- DE-A1- 102010 040 856
- US-A1- 2012 302 927
- SPIES M ET AL: "Synthetic aperture focusing of ultrasonic inspection data to enhance the probability of detection of defects in strongly attenuating materials", NDT & E INTERNATIONAL, BUTTERWORTH-HEINEMANN, OXFORD, GB, vol. 43, no. 5, 1 July 2010 (2010-07-01), pages 425 - 431, XP027061252, ISSN: 0963-8695, [retrieved on 20100424]
- HALLER JULIAN ET AL: "A comparative evaluation of three hydrophones and a numerical model in high intensity focused ultrasound fields", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 131, no. 2, 1 February 2012 (2012-02-01), pages 1121 - 1130, XP012159914, ISSN: 0001-4966, [retrieved on 19010101], DOI: 10.1121/1.3675003

## Beschreibung

Die vorliegende Erfindung betrifft ein Verfahren und eine Vorrichtung zur Ultraschallprüfung von Prüfobjekten, insbesondere metallischen Komponenten, mittels einer SAFT-Analyse.

Mittels Ultraschallprüfung werden Defekte, insbesondere in metallischen Komponenten, beispielsweise in Schmiedeerzeugnissen detektiert. Zur besseren Lokalisierung und Trennung von Defekten ist die Analysetechnik SAFT bekannt.

Als SAFT (Synthetic Aperture Focusing Technique) oder Synthetisches Aperturverfahren bezeichnet man ein Verfahren bei dem ein B-Bild aus zuvor aufgenommenen, digitalisierten und gespeicherten A-Bildern rechnerisch erhalten wird. Ein Prüfkopf mit möglichst großem Öffnungswinkel wird längs einer Linie bewegt. Dabei werden in Abständen A-Bilder digitalisiert und in einem Rechner gespeichert. Je nach Prüfkopfposition treten Echos eines Fehlers mit entsprechenden Laufzeitunterschieden auf. Zu jedem Voxel des Prüfvolumens eines Werkstücks werden herkömmlicher Weise für jede Prüfkopfposition die zu erwartenden Schalllaufzeiten aus geometrischen Verhältnissen berechnet und in den gespeicherten A-Bildern die diesen Laufzeiten entsprechenden Echoamplituden aufgesucht und addiert. Dies hat eine exakte Laufzeitkompensation am Ort eines Fehlers zur Folge, so dass dort die Fehlerechos aus allen Prüfkopfpositionen phasenrichtig überlagert werden und zu einer rechnerisch entsprechend hohen Amplitude führen. Damit wird die Schallintensität auf das jeweils betrachtete Voxel fokussiert. Wird bei einer derartigen synthetischen Fokussierung jedem Voxel der gewonnenen Amplitudenwert zugeordnet, wird ein fokussierter Volumendatensatz erhalten.

Die Inspektion erfolgt dabei auf herkömmliche Weise, jedoch werden die HF-Daten und die genauen Positionsinformationen aufgezeichnet. Bei der anschließenden SAFT-Analyse der Messdaten werden Amplitudensummen und aus vielen Zeitsignalen, den sogenannten A-Bildern, jeweils für kleine Elemente des zu prüfenden Volumens berechnet. Derartige Elemente des zu prüfenden Volumens werden als Voxel bezeichnet. Entsprechend dem jeweiligen Abstand zwischen Voxel und Messpunkt, der die Position des Prüfkopfes ist, werden die Amplituden zu den Zeitpunkten summiert, die dem jeweiligen Abstand Voxel zu Messpunkt entsprechen.

Aufgrund des Öffnungswinkels des vom Prüfkopf ausgesandten Schallbündels werden Defektanzeigen räumlich verschmiert, so dass in der Schnittansicht, dem so genannten B-Bild, aus punktförmigen Defekten sichelförmige Anzeigen werden. Mittels der SAFT-Auswertung werden diese sichelförmigen Anzeigen wieder auf punktförmige Anzeigen konzentriert.

Dies funktioniert jedoch lediglich im so genannten Fernfeld, in der Nähe der Prüflingsoberfläche entstehen bedingt durch das Prüfkopfschallfeld andere Anzeigeformen. Daher erzielt die herkömmliche SAFT-Auswertung in der Nähe der Prüffläche schlechte Ergebnisse.

Es sind verschiedene Varianten des SAFT-Algorithmus bekannt, die jedoch auf andere Problemstellungen zielen und keine Verbesserung im Nahfeld bewirken. So ist beispielsweise zur Beschleunigung der Berechnung die FT-SAFT-Analyse bekannt, die für ebene Prüfflächen einen deutlichen Geschwindigkeitsvorteil durch Nutzung der Fourier-Transformation bewirkt. Des Weiteren ist zur Prüfung von homogen anisotropen Materialien das HAFT-SAFT-Verfahren bekannt, bei dem die richtungsabhängige Ausbreitungsgeschwindigkeit berücksichtigt wird. An Stelle einer Kugelwelle werden die Energiegeschwindigkeitsflächen einer Punktwelle abhängig von den jeweiligen Materialien zugrunde gelegt.

Die DE 10 2005 051 783 A1 offenbart ein Verfahren und eine Vorrichtung zur bildgebenden Ultraschallprüfung an einem dreidimensionalen Werkstück.

Die EP 2 469 276 A1 offenbart ein Verfahren und eine Vorrichtung zur zerstörungsfreien Materialprüfung eines Prüfgegenstands mit Ultraschallwellen.

Die DE 10 2010 040856 A1 offenbart ein Verfahren und eine Vorrichtung zur Ermittlung einer Orientierung eines innerhalb eines mechanischen Bauteils bestehenden Defektes.

Die wissenschaftliche Arbeit "Synthetic aperture focusing of ultrasonic inspection data to enhance the probability of detection of defects in strongly attenuating materials", Spies et al. NDT&E International vom 01. Juli 2010 beschreibt die Bestimmung der Größe von Fehlern in stark dämpfenden Materialien und die Bestimmung der Nachweiswahrscheinlichkeit (POD) aus Ultraschalldaten. Exemplarisch werden Duplex-Edelstähle angesprochen, deren ferritisch-austenitisches Mischgefüge eine erhebliche Dämpfung der Ultraschallwellen bewirkt. Daher wurde die Synthetische Apertur Fokussiertechnik (SAFT) angewendet, die zu einer Reduzierung der mikrostrukturellen Rauschsignale und damit zu einer Verbesserung der Fehlererkennung führt. Basierend auf den Ultraschall-HF-Daten, die auf einem Prüfstand mit Modellfehlern erfasst wurden, wurde ein Versus-Ansatz durchgeführt, um den POD für den geprüften Duplex-Probenkörper nach MIL-HDBK-1823 zu bestimmen.

Es ist Aufgabe ein Verfahren und eine Vorrichtung zur Ultraschallprüfung von Prüfobjekten, insbesondere metallischen Komponenten, mittels einer Analyse, insbesondere SAFT-Analyse, derart bereit zu stellen, dass im Vergleich zum Stand der Technik bessere Ergebnisse der SAFT-Berechnung in der Nähe der Oberfläche eines Prüfobjektes, insbesondere eine bessere Defektlokalisierung, eine stärkere Defekttrennung und ein größeres Signal-zu-Rausch-Verhältnis bewirkt werden. Es soll eine verbesserte Prüfung von Prüfobjekten mit kleinen Querabmessungen, eine verbesserte Analyse von oberflächennahen Defekten sowie eine verbesserte Auswertung bei Verwendung großer oder fokussierter Prüfköpfe ausführbar sein.

Die Aufgabe wird durch ein Verfahren gemäß den Merkmalen des Hauptanspruchs und eine Vorrichtung gemäß den Merkmalen des Nebenanspruchs gelöst.

Gemäß einem ersten Aspekt wird ein Verfahren zur Ultraschallprüfung von Prüfobjekten, insbesondere metallischen Komponenten, mittels eines Prüfkopfs vorgeschlagen, wobei bei einer Analyse, insbesondere SAFT-Analyse, jeweils für Elemente eines zu prüfenden Volumens des Prüfobjektes aus einer Anzahl von A-Bild-Zeitsignalen eine Berechnen von Amplitudensummen ausgeführt wird, wobei zur Bestimmung von Zeitpunkten der zu summierenden Amplituden in den A-Bild-Zeitsignalen eine von dem Prüfkopf abhängige Schalllaufzeit von dem an einem Messpunkt positionierten Prüfkopf zum Ort des Elements des zu prüfenden Volumens direkt erfasst und verwendet wird.

Es wird die Schalllaufzeit mittels Auswerten einer Schallfeldsimulation des Prüfkopfes für das jeweilige Material des Prüfobjektes bestimmt. Durch Berücksichtigung der Schallfeldform des/der eingesetzten Prüfkopfs/Prüfköpfe bei der SAFT-Analyse wird die Auswertung in der Nähe der Prüffläche verbessert.

Es wird bei der Schallfeldsimulation eine exakte Form und eine Aperturbelegung eines Schwingers des Prüfkopfes berücksichtigt.

Es wird bei der Schallfeldsimulation eine Fokussierung des Prüfkopfes berücksichtigt.

Es wird bei der Schallfeldsimulation bei Phased-Arrays eine Verzögerung gemäß dem Verzögerungsgesetz berücksichtigt. Das Verzögerungsgesetz wird ebenso als "Delay Law" bezeichnet.

Es ist die Schallfeldsimulation monochromatisch oder polychromatisch.

Es wird die Schallfeldsimulation mittels einer Punktquellensynthese oder raumdiskret ausgeführt. Beispiele sind FE, EFIT und dergleichen. FE ist ein herkömmliches Finite-Elemente-Verfahren. EFIT ist ein als Elastodynamisch-Finite-Integrations-Technik bezeichnetes herkömmliches Verfahren.

Gemäß einem zweiten Aspekt wird eine Vorrichtung zur Ultraschallprüfung vom Prüfobjekt, insbesondere metallischen Komponenten, mittels eines Prüfkopfs vorgeschlagen, wobei mittels einer Recheneinrichtung bei einer Analyse, insbesondere SAFT-Analyse, jeweils für Elemente eines zu prüfenden Volumens des Prüfobjektes aus einer Anzahl von A-Bild-Zeitsignalen ein Berechnen von Amplitudensummen ausgeführt wird, wobei die Rechnereinrichtung zur Bestimmung von Zeitpunkten der zu summierenden Amplituden in den A-Bild-Zeitsignalen eine von dem Prüfkopf abhängige Schalllaufzeit von dem an einem Messpunkt positionierten Prüfkopf zum Ort des Elementes des zu prüfenden Volumens direkt erfasst und verwendet und die Rechnereinrichtung die Schalllaufzeit mittels Auswerten einer Schallfeldsimulation des Prüfkopfes für das jeweilige Material des Prüfobjektes bestimmt, wobei die Rechnereinrichtung bei der Schallfeldsimulation eine exakte Form und eine Aperturbelegung eines Schwingers des Prüfkopfes berücksichtigt und die Rechnereinrichtung bei der Schallfeldsimulation eine Fokussierung des Prüfkopfes berücksichtigt, wobei die Rechnereinrichtung bei der Schallfeldsimulation bei Phased-Arrays eine Verzögerung gemäß einem Verzögerungsgesetz berücksichtigt, wobei die Rechnereinrichtung die Schallfeldsimulation monochromatisch oder polychromatisch ausführt, wobei die Rechnereinrichtung die Schallfeldsimulation mittels einer Punktquellensynthese oder raumdiskret ausführt.

Eine insbesondere bildgebende Ultraschallprüfung umfasst grundsätzlich alle graphischen Darstellungsweisen einer erfassten Amplitude in Abhängigkeit von der Zeit oder dem Ort. Sie reicht von der einfachen HF-Bild-Darstellung mittels eines einfachen Oszillographen über das A-Bild bis hin zu einem D-Bild. Derartige Ultraschallbilder unterscheiden sich je nach Darstellung in ihrem Aussagegehalt. Dabei kommt dem A-Bild (weniger dem HF-Bild) aufgrund seiner verhältnismäßig leicht zu interpretierenden Darstellung eine besondere Bedeutung zu. Die Ultraschallprüfung wird aus physikalischen Gründen zumeist als Einzelpunktprüfung ausgeführt, deren Signale als A-Bild verarbeitet werden, das beispielsweise ein nicht gleichgerichtetes HF-Bild sein kann. A- Bilder können nicht gleichgerichtet oder gleichgerichtet sein. Erst später wurden entwicklungsgeschichtlich der Linien-Scan (B-Bild) und der Flächen-Scan (C/D-Bild) technisch nutzbar. Der Scan ist dabei ein Abrastern, weil die A-Bilder je linien- oder flächenartig als Bild zusammengesetzt und (beispielsweise nach Farben oder Graustufen) skaliert werden. Bei einer Messung werden die HF-Signale in Abhängigkeit vom Ort und der Zeit registriert, und bezüglich der Signallaufzeit und/oder der Amplitude beziehungsweise Dämpfung analysiert.

Bei der SAFT-Analyse wird - im Gegensatz zur herkömmlichen Verwendung des Abstands zwischen Messpunkt und Voxel - die prüfkopfabhängige Schalllaufzeit von einem am Messpunkt platzierten Prüfkopf zum Ort des Voxel berücksichtigt, um die Zeitpunkte der zu summierenden Amplituden in den A-Bild-Zeitsignalen zu bestimmen. Die Bestimmung der prüfkopfabhängigen Schalllaufzeit kann dabei auf unterschiedliche Weise erfolgen.

Die Schalllaufzeiten werden nicht indirekt aus geometrischen Größen hergeleitet, sondern gehen nach deren direkten Messung direkt in die Festlegung der zu summierenden Amplituden der Amplituden-Zeit-Verläufe der A-Bild-Zeitsignale ein.

Weitere vorteilhafte Ausgestaltungen werden in Verbindung mit den Unteransprüchen beansprucht.

Gemäß einer weiteren vorteilhaften Ausgestaltung kann bei der Schallfeldsimulation die Oberflächenform des Prüfobjektes berücksichtigt werden.

Gemäß einer weiteren vorteilhaften Ausgestaltung können Schalllaufzeiten der Schallfeldsimulation vorab bestimmt, tabelliert und abrufbar gespeichert werden.

Eine Durchführung der Schallfeldsimulation kann vorab ausgeführt werden und danach eine Tabellierung der Ergebnisse erfolgen.

Gemäß einer weiteren vorteilhaften Ausgestaltung können Schalllaufzeiten mittels Messen eines Schallfelds des Prüfkopfes für das jeweilige Material des Prüfkopfes vorab erfasst, tabelliert und abrufbar gespeichert werden.

Eine Bestimmung des Schallfeldes kann durch Messung erfolgen und danach kann eine Tabellierung der Ergebnisse ausgeführt werden.

Gemäß einer weiteren vorteilhaften Ausgestaltung können tabellierte Schalllaufzeiten für eine Vielzahl von Prüfköpfen in einer Prüfkopfbibliothek abrufbar gespeichert werden.

Eine Durchführung der Schallfeldsimulation kann für viele Prüfköpfe ausgeführt werden und eine Speicherung der Schalllaufzeiten kann in einer Prüfkopfbibliothek erfolgen.

Gemäß einer weiteren vorteilhaften Ausgestaltung können aus tabellierten Laufzeiten jeweilige Schalllaufzeiten interpoliert werden. Es kann eine Interpolation der Schalllaufzeit vom Messpunkt zum Voxel aus den tabellierten Laufzeiten ausgeführt werden.

Die Erfindung wird anhand von Ausführungsbeispielen in Verbindung mit den Figuren näher beschrieben. Es zeigen:
- Figur 1: ein Ausführungsbeispiel eines erfindungsgemäßen Verfahrens;
- Figur 2: ein Ausführungsbeispiel einer erfindungsgemäßen Vorrichtung.

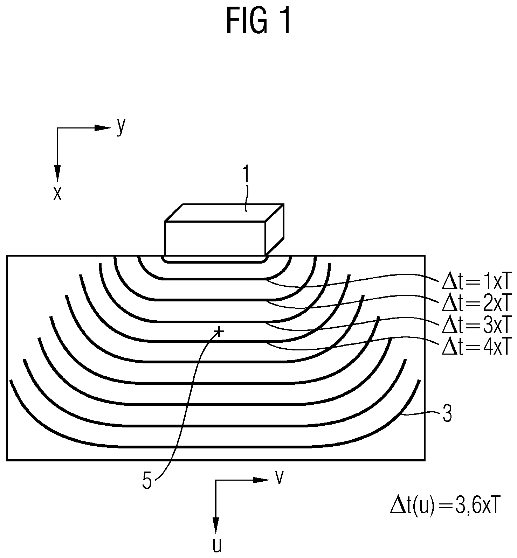

Figur 1 zeigt ein Ausführungsbeispiel eines erfindungsgemäßen Verfahrens. Figur zeigt Wellenfronten im Nahfeld eines Prüfkopfes 1, wobei Laufzeiten Δt als Vielfache einer Grundzeitdauer oder Periode T angegeben sind. Gemäß der vorliegenden Erfindung werden bessere Ergebnisse der SAFT-Berechnung in der Nähe der Prüffläche, insbesondere bessere Defektlokalisation, stärkere Defekttrennung und größeren NNR bewirkt. Es ergibt sich eine verbesserte Prüfung von Objekten 3 mit kleiner Querabmessung, eine verbesserte Analyse oberflächennaher Defekte 5 aufgrund einer direkten Anschallung und kürzerer Schallwege sowie eine verbesserte Auswertung beim Einsatz großer Prüfköpfe 1, um beispielsweise mehr Signalenergie in das Prüfobjekt 3 einzubringen, oder beim Einsatz fokussierter Prüfköpfe. Fig. 1 zeigt sich von dem Prüfkopf 1 pulsartig ausbreitende Ultraschallwellen, die an ganzen Vielfachen einer Periode T im Nahfeld des Prüfkopfs 1 jeweils eine Wellenfront erzeugen. Eine Position eines Defektes 5 kann in diesem Beispiel als eine Schalllaufzeit Δt = 3,6 x T angegeben und festgelegt werden. Allgemein ist Δt von allen Koordinaten u, v, w abhängig. Grundsätzlich gilt Δt(u, v, w). Im Unterschied zu herkömmlichen Verfahren wird die Position des Defekts direkt als Schalllaufzeit Δt ausgedrückt, und mit dieser eine für eine Aufsummierung vorgesehene Amplitude eines A-Bild-Zeitsignals insbesondere bei einer SAFT-Analyse festgelegt.

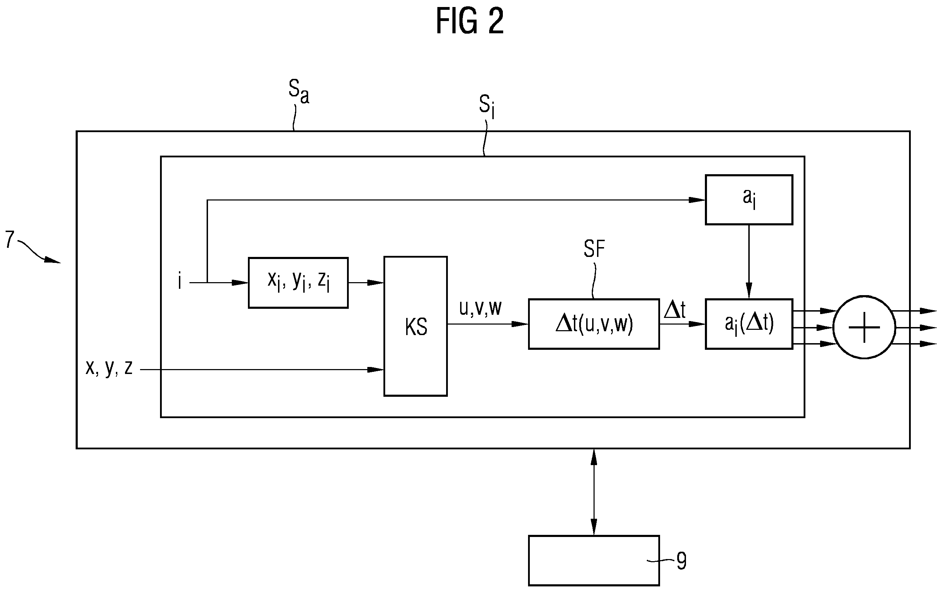

Figur 2 zeigt ein Ausführungsbeispiel einer erfindungsgemäßen Vorrichtung, die ein Verfahren gemäß Fig. 1 ausführt. Mittels eines Prüfkopfes 1 und einer Messeinrichtung können Schalllaufzeiten Δt mittels Messen eines Schallfeldes des Prüfkopfes 1 für das jeweilige Material des Prüfobjekts 3 vorab erfasst werden.

Mittels einer Rechnereinrichtung 7 können bei einer SAFT-Analyse jeweils für Voxel des Prüfobjektes 3 aus einer Anzahl von A-Bild-Zeitsignalen ein Berechnen von Amplitudensummen "+" ausgeführt werden, wobei die Rechnereinrichtung 7 zur Bestimmung von Zeitpunkten Δt der zu summierenden Amplituden aᵢ(Δt) in den gemessenen A-Bild-Zeitsignalen aᵢ eine von dem Prüfkopf 1 abhängige Schalllaufzeit Δt von dem an einem jeweiligen Messpunkt i(xᵢ, yᵢ, zᵢ) positionierten Prüfkopf 1 zum Ort des Voxels beziehungsweise Defekts 5 verwendet. Mittels der Rechnereinrichtung 7 können die Schalllaufzeiten Δt beispielsweise mittels Auswerten einer Schallfeldsimulation des Prüfkopfes 1 für das jeweilige Material des Prüfobjektes 3 bestimmt werden. Die Rechnereinrichtung 7 kann Schalllaufzeiten Δt tabellarisch erfassen und die sich ergebenden Tabellen können mittels einer Speichereinrichtung 9 wiederabrufbar gespeichert werden. In Fig. 2 ist eine äußere Schleife Sa über rekonstruierte Positionen x, y, z und eine innere Schleife Si über Messpositionen i dargestellt. Es erfolgt eine Koordinatensystemtransformation KS in u-, v-, w- Koordinaten. Mittels des Schallfeldes SF des Prüfkopfes 1 werden aus u-, v-, w-Koordinaten entsprechende Schalllaufzeiten Δt generiert. Fig. 1 veranschaulicht die Darstellung der u-Koordinate des Defekts 5 im Objekt 3 als Schalllaufzeit Δt(u).

Die Erfindung betrifft ein Verfahren und eine Vorrichtung zur Ultraschallprüfung von Prüfobjekten mittels eines Prüfkopfes, wobei mittels einer Rechnereinrichtung bei einer SAFT-Analyse zur Bestimmung von Zeitpunkten der zu summierenden Amplituden in den A-Bild-Zeitsignalen eine von dem Prüfkopf abhängige Schalllaufzeit von dem an einem Messpunkt positionierten Prüfkopf zum Ort des Voxels direkt erfasst und verwendet.

## Patentansprüche

1. Verfahren zur Ultraschallprüfung von Prüfobjekten, insbesondere metallischen Komponenten, mittels eines Prüfkopfs (1), wobei bei einer SAFT-Analyse jeweils für Elemente eines zu prüfenden Volumens des Prüfobjektes (3) aus einer Anzahl von A-Bild-Zeitsignalen ein Berechnen von Amplitudensummen ausgeführt wird,
wobei zur Bestimmung von Zeitpunkten der zu summierenden Amplituden in den A-Bild-Zeitsignalen eine von dem Prüfkopf abhängige Schalllaufzeit (Δt) von dem an einem Messpunkt positionierten Prüfkopf (1) zum Ort des Elementes des zu prüfenden Volumens direkt erfasst wird,
und die Schalllaufzeit mittels Auswerten einer Schallfeldsimulation des Prüfkopfes für das jeweilige Material des Prüfobjektes verwendet wird,
**dadurch gekennzeichnet, dass**
bei der Schallfeldsimulation eine Form und eine Aperturbelegung eines Schwingers des Prüfkopfes berücksichtigt werden und bei der Schallfeldsimulation eine Fokussierung des Prüfkopfes berücksichtigt wird, wobei bei der Schallfeldsimulation bei einem Phased-Array Prüfkopf eine Verzögerung gemäß einem Verzögerungsgesetz berücksichtigt wird, wobei die Schallfeldsimulation monochromatisch oder polychromatisch ist, und die Schallfeldsimulation mittels einer Punktquellensynthese oder raumdiskret ausgeführt wird.

2. Verfahren nach Anspruch 1,
**dadurch gekennzeichnet, dass**
bei der Schallfeldsimulation die Oberflächenform des Prüfobjektes berücksichtigt wird.

3. Verfahren nach einem der vorhergehenden Ansprüche,
**dadurch gekennzeichnet, dass**
Schalllaufzeiten der Schallfeldsimulation vorab bestimmt, tabelliert und abrufbar gespeichert werden.

4. Verfahren nach Anspruch 1,
**dadurch gekennzeichnet, dass**
Schalllaufzeiten mittels Messen eines Schallfelds des Prüfkopfes für das jeweilige Material des Prüfobjektes vorab erfasst, tabelliert und abrufbar gespeichert werden.

5. Verfahren nach einem der vorhergehenden Ansprüche 3 oder 4,
**dadurch gekennzeichnet, dass**
tabellierte Schalllaufzeiten für eine Vielzahl von Prüfköpfen in einer Prüfkopfbibliothek abrufbar gespeichert werden.

6. Verfahren nach einem der vorhergehenden Ansprüche 3 bis 5,
**dadurch gekennzeichnet, dass**
aus tabellierten Laufzeiten jeweilige Schalllaufzeiten interpoliert werden.

7. Vorrichtung eingerichtet zum Durchführen eines Verfahrens nach einem der Ansprüche 1 bis 6, aufweisend eine Rechnereinrichtung und einen Prüfkopf, zur Ultraschallprüfung von Prüfobjekten, insbesondere metallischen Komponenten, mittels des Prüfkopfs, wobei die Rechnereinrichtung dazu ausgebildet ist, bei einer SAFT-Analyse jeweils für Elemente eines zu prüfenden Volumens des Prüfobjektes aus einer Anzahl von A-Bild-Zeitsignalen ein Berechnen von Amplitudensummen auszuführen, wobei die Rechnereinrichtung dazu eingerichtet ist, zur Bestimmung von Zeitpunkten der zu summierenden Amplituden in den A-Bild-Zeitsignalen eine von dem Prüfkopf abhängige Schalllaufzeit von dem an einem Messpunkt positionierten Prüfkopf zum Ort des Elementes des zu prüfenden Volumens direkt zu erfassen und zu verwenden, und die Rechnereinrichtung dazu eingerichtet ist, die Schalllaufzeit mittels Auswerten einer Schallfeldsimulation des Prüfkopfes für das jeweilige Material des Prüfobjektes zu bestimmen, **dadurch gekennzeichnet, dass** die Rechnereinrichtung dazu eingerichtet ist, bei der Schallfeldsimulation eine Form und eine Aperturbelegung eines Schwingers des Prüfkopfes zu berücksichtigen und die Rechnereinrichtung bei der Schallfeldsimulation eine Fokussierung des Prüfkopfes zu berücksichtigen, wobei die Rechnereinrichtung dazu eingerichtet ist, bei der Schallfeldsimulation bei einem Phased-Array Prüfkopf eine Verzögerung gemäß einem Verzögerungsgesetz zu berücksichtigen, wobei die Rechnereinrichtung dazu eingerichtet ist, die Schallfeldsimulation monochromatisch oder polychromatisch auszuführen, und wobei die Rechnereinrichtung dazu eingerichtet ist, die Schallfeldsimulation mittels einer Punktquellensynthese oder raumdiskret auszuführen.

8. Vorrichtung nach Anspruch 7,
**dadurch gekennzeichnet, dass**
die Rechnereinrichtung dazu eingerichtet ist, bei der Schallfeldsimulation die Oberflächenform des Prüfobjektes zu berücksichtigen.

9. Vorrichtung nach einem der vorhergehenden Ansprüche 7 oder 8,
**dadurch gekennzeichnet, dass**
die Rechnereinrichtung dazu eingerichtet ist, Schalllaufzeiten der Schallfeldsimulation vorab zu bestimmen und in einer Tabelle zu tabellieren, und die Tabelle mittels einer Speichereinrichtung der Rechnereinrichtung abrufbar zu speichern.

10. Vorrichtung nach Anspruch 7,
**dadurch gekennzeichnet, dass**
die Vorrichtung eine Messeinrichtung aufweist, die Messeinrichtung dazu eingerichtet ist, Schalllaufzeiten mittels Messen eines Schallfelds des Prüfkopfes für das jeweilige Material des Prüfobjektes vorab zu erfassen,und die Rechnereinrichtung dazu eingerichtet ist, die gemessenen Schalllaufzeiten in einer Tabelle zu tabellieren und in einer Speichereinrichtung der Rechnereinrichtung die Tabelle abrufbar zu speichern.

11. Vorrichtung nach einem der vorhergehenden Ansprüche 9 oder 10,
**dadurch gekennzeichnet, dass**
die Speichereinrichtung eine Prüfkopfbibliothek aufweist, und die Speichereinrichtung dazu eingerichtet ist, die tabellierten Schalllaufzeiten für eine Vielzahl von Prüfköpfen in einer Prüfkopfbibliothek abrufbar zu speichern.

12. Vorrichtung nach einem der vorhergehenden Ansprüche 9 bis 11,
**dadurch gekennzeichnet, dass**
die Rechnereinrichtung dazu eingerichtet ist, aus tabellierten Laufzeiten jeweilige Schalllaufzeiten zu interpolieren.

## Claims

1. Method for ultrasonic testing of test objects, in particular metallic components, by means of a test head (1), wherein in an SAFT analysis, a calculation of amplitude summations is executed in each case for elements of a volume to be tested of the test object (3) from a number of A-image time signals,
wherein to determine points in time of the amplitudes to be summed in the A-image time signals, a sound propagation time (Δt), which is dependent on the test head, from the test head (1) positioned at a measurement point to the location of the element of the volume to be tested is directly acquired,
and the sound propagation time is used by means of analysis of a sound field simulation of the test head for the respective material of the test object,
**characterized in that**
a shape and an aperture allocation of an oscillator of the test head are taken into consideration in the sound field simulation, and a focusing of the test head is taken into consideration in the sound field simulation, wherein a delay according to a delay law is taken into consideration in the sound field simulation in the case of a phased array test head, wherein the sound field simulation is monochromatic or polychromatic, and the sound field simulation is executed by means of a point source synthesis or in a spatially discrete manner.

2. Method according to Claim 1,
**characterized in that**
the surface shape of the test object is taken into consideration in the sound field simulation.

3. Method according to either of the preceding claims,
**characterized in that**
sound propagation times of the sound field simulation are determined beforehand, tabulated, and stored in retrievable form.

4. Method according to Claim 1,
**characterized in that**
sound propagation times are acquired beforehand, tabulated, and stored in retrievable form by means of measurement of a sound field of the test head for the respective material of the test object.

5. Method according to either of the preceding Claims 3 and 4,
**characterized in that**
tabulated sound propagation times for a plurality of test heads are stored in retrievable form in a test head library.

6. Method according to any of the preceding Claims 3 to 5,
**characterized in that**
respective sound propagation times are interpolated from tabulated propagation times.

7. Apparatus configured to carry out a method according to any of Claims 1 to 6,
comprising a computer unit and a test head,
for ultrasonic testing of test objects,
in particular metallic components, by means of the test head, wherein, in an SAFT analysis, the computer unit is designed to execute a calculation of amplitude summations in each case for elements of a volume to be tested of the test object from a number of A-image time signals,
wherein, in order to determine points in time of the amplitudes to be summed in the A-image time signals, the computer unit is configured to directly acquire and use a sound propagation time, which is dependent on the test head, from the test head positioned at a measurement point to the location of the element of the volume to be tested, and the computer unit is configured to determine the sound propagation time by means of analysis of a sound field simulation of the test head for the respective material of the test object,
**characterized in that**
the computer unit is configured to take a shape and an aperture allocation of an oscillator of the test head into consideration in the sound field simulation, and the computer unit is configured to take a focusing of the test head into consideration in the sound field simulation,
wherein the computer unit is configured to take a delay according to a delay law into consideration in the sound field simulation in the case of a phased array test head,
wherein the computer unit is configured to execute the sound field simulation in monochromatic or polychromatic fashion, and wherein the computer unit is configured to execute the sound field simulation by means of a point source synthesis or in a spatially discrete manner.

8. Apparatus according to Claim 7,
**characterized in that**
the computer unit is configured to take the surface shape of the test object into consideration in the sound field simulation.

9. Apparatus according to either of the preceding Claims 7 and 8,
**characterized in that**
the computer unit is configured to determine sound propagation times of the sound field simulation beforehand and to tabulate them in a table and to store the table in a retrievable manner by means of a storage unit of the computer unit.

10. Apparatus according to Claim 7,
**characterized in that**
the apparatus comprises a measuring unit, the measuring unit is configured to acquire sound propagation times beforehand by means of measurement of a sound field of the test head for the respective material of the test object, and the computer unit is configured to tabulate the measured sound propagation times in a table and to store the table in retrievable form in a storage unit of the computer unit.

11. Apparatus according to either of the preceding Claims 9 and 10,
**characterized in that**
the storage unit comprises a test head library,
and the storage unit is configured to store the tabulated sound propagation times for a plurality of test heads in retrievable form in a test head library.

12. Apparatus according to any of the preceding Claims 9 to 11,
**characterized in that**
the computer unit is configured to interpolate respective sound propagation times from tabulated propagation times.

## Revendications

1. Procédé de contrôle par ultrasons d'objets à contrôler, en particulier de composants métalliques, au moyen d'une tête (1) de contrôle, dans lequel, lors d'une analyse SAFT, on exécute, respectivement pour des éléments d'un volume à contrôler d'un objet (3) à contrôler à partir d'un nombre de signaux de temps-image-A, un calcul de sommes d'amplitudes,
dans lequel, pour la détermination des instants des amplitudes à sommer dans les signaux de temps-image-A, on détecte un temps (Δt) de propagation du son, qui dépend de la tête de contrôle, directement de la tête (1) de contrôle en position en un point de mesure à l'emplacement de l'élément du volume à contrôler,
et on utilise le temps de propagation du son au moyen d'une évaluation d'une simulation d'un champ sonore de la tête de contrôle pour le matériau respectif de l'objet à contrôler,
**caractérisé en ce que**,
dans la simulation du champ sonore, on prend en compte une forme et une occupation d'ouverture d'un oscillateur de la tête de contrôle et, dans la simulation du champ sonore, on prend en compte une focalisation de la tête de contrôle, dans lequel, dans la simulation du champ sonore, on prend en compte, dans une tête de contrôle à réseau phasé, un retard suivant une loi de retard, dans lequel la simulation du champ sonore est monochromatique ou polychromatique et on effectue la simulation du champ sonore au moyen d'une synthèse de sources ponctuelles ou d'une manière discrète dans l'espace.

2. Procédé suivant la revendication 1,
**caractérisé en ce que**,
dans la simulation du champ sonore, on prend en compte la forme des surfaces de l'objet à contrôler.

3. Procédé suivant l'une des revendications précédentes,
**caractérisé en ce que**
l'on détermine à l'avance sous forme de tableau et on met en mémoire, de manière à pouvoir les appeler, des temps de propagation du son de la simulation du champ sonore.

4. Procédé suivant la revendication 1,
**caractérisé en ce que**
l'on détermine à l'avance, on met sous forme de tableau et on met en mémoire, de manière à pouvoir les appeler, des temps de propagation du son au moyen d'une mesure d'un champ sonore de la tête de contrôle pour le matériau respectif de l'objet à contrôler.

5. Procédé suivant l'une des revendications 3 ou 4 précédentes,
**caractérisé en ce que**
l'on met en mémoire, de manière à pouvoir les appeler, dans une bibliothèque de tête de contrôle, des temps de propagation du son mis en tableau pour une pluralité de têtes de contrôle.

6. Procédé suivant l'une des revendications 3 à 5 précédentes,
**caractérisé en ce que**
l'on interpole des temps de parcours du son respectifs à partir des temps de parcours mis en tableau.

7. Installation agencée pour effectuer un procédé suivant l'une des revendications 1 à 6,
comprenant un dispositif informatique et une tête de contrôle, pour le contrôle par ultrasons d'objets à contrôler, en particulier de composants métalliques au moyen de la tête de contrôle, dans laquelle le dispositif informatique est constitué pour effectuer, lors d'une analyse SAFT, respectivement pour des éléments d'un volume à contrôler de l'objet à contrôler à partir d'un nombre de signaux de temps-image-A, un calcul de sommes d'amplitudes,
dans laquelle le dispositif informatique est agencé pour, pour la détermination d'instant des amplitudes à sommer dans les signaux temps-image-A, détecter et utiliser un temps de propagation du son, qui dépend de la tête de contrôle, directement d'une tête de contrôle en position en un point de mesure à l'emplacement de l'élément du volume à contrôler et le dispositif informatique est agencé pour déterminer le temps de propagation du son au moyen d'une simulation du champ sonore de la tête de contrôle et du matériau respectif de l'objet de contrôle,
**caractérisée en ce que**
le dispositif informatique est agencé pour, dans la simulation du champ sonore, prendre en compte une forme et une occupation d'ouverture d'un oscillateur de la tête de contrôle et le dispositif informatique est agencé pour, dans la simulation du champ sonore, prendre en compte une focalisation de la tête de contrôle,
dans laquelle le dispositif informatique est agencé pour, dans la simulation du champ sonore, prendre en compte pour une tête de contrôle à réseau phasé, un retard suivant une loi de retard,
dans laquelle le dispositif informatique est agencé pour effectuer la simulation du champ sonore monochromatiquement ou polychromatiquement, et dans laquelle le dispositif informatique est agencé pour effectuer la simulation du champ sonore au moyen d'une synthèse de sources ponctuelles d'une manière discrète dans l'espace.

8. Installation suivant la revendication 7,
**caractérisée en ce que**
le dispositif informatique est agencé pour prendre en compte, dans la simulation du champ sonore, la forme des surfaces de l'objet à contrôler.

9. Installation suivant l'une des revendications 7 ou 8 précédentes,
**caractérisée en ce que**
le dispositif informatique est agencé pour déterminer à l'avance des temps de propagation du son de la simulation du champ sonore et les mettre dans une table et mettre la table en mémoire, de manière à pouvoir l'appeler au moyen d'un dispositif de mémoire du dispositif informatique.

10. Installation suivant la revendication 7,
**caractérisée en ce que**
l'installation a au moins un dispositif de mesure, le dispositif de mesure est agencé pour détecter à l'avance des temps de propagation du son au moyen d'une mesure d'un champ sonore de la tête de contrôle pour le matériau respectif de l'objet à contrôler, et
le dispositif informatique est agencé pour mettre dans une table les temps de propagation du son mesurés et mettre la table, de manière à pouvoir l'appeler, dans un dispositif de mémoire du dispositif informatique.

11. Installation suivant l'une des revendications 9 ou 10 précédentes,
**caractérisée en ce que**
le dispositif de mémoire a une bibliothèque de tête de contrôle, et le dispositif de mémoire est agencé pour mettre dans une bibliothèque de tête de contrôle, de manière à pouvoir les appeler, les temps de propagation du son mis sous forme de table pour une pluralité de têtes de contrôle.

12. Installation suivant l'une des revendications 9 à 11 précédentes,
**caractérisée en ce que**
le dispositif informatique est agencé pour interpoler, à partir de temps de propagation mis sous forme de table, respectivement des temps de propagation du son.
